# EUROPEAN PATENT APPLICATION

(11) **EP 2 879 038 A1**
(43) Date of publication of application: **03.06.2015**
(21) Application number: 14193746.6
(22) Date of filing: 18.11.2014
(51) Int. Cl.: G06F 3/0488, G06K 9/00, G06K 9/22

(54) **Input system with parallel input data**

(30) Priority: 02.12.2013 US 201314093893
(71) Applicant: Sony Corporation, Tokyo 108-0075 (JP)
(72) Inventor: Johansson, Magnus, 244 71 Dösjebro (SE); Midholt, Magnus, 222 22 Lund (SE); Hunt, Alexander, 218 72 Tygelsjö (SE); Lin, Xiaotian, 224 72 Lund (SE); Moliner, Olivier, 224 60 Lund (SE)
(74) Representative: Zacco Sweden AB

(57) **Abstract**

A method, a device, and a non-transitory storage medium having instructions to receive sensed data based on an input from a user via a display; generate parallel streams of input data based on the sensed data, wherein one or more of the parallel streams of input data comprise one or more input characteristics, wherein the one or more input characteristics comprise one or more of prediction data or smoothing data; and output the parallel streams of input data, wherein the parallel streams of input data are made available to an application with which the user is interacting.

## Description

### Background

Touch screens (also known as touch displays) are commonplace in existing mobile devices. Additionally, touchless screen technology has been introduced and may be considered a next-generation form of input for users of various devices, as well as 3D multi-touch technology. While these various input technologies allow users a great deal of flexibility, their integration with applications running on a device presents various complexities.

### Summary

According to one aspect, a method may comprise sensing, via a display of a user device, an input from a user; receiving, by an input system of the user device, sensed data; generating, by the input system of the user device, parallel streams of input data based on the sensed data, wherein one or more of the parallel streams of input data comprise one or more input characteristics, wherein the one or more input characteristics comprise one or more of prediction data or smoothing data; outputting, by the input system of the user device, the parallel streams of input data; selecting, by an application of the user device, at least one of the parallel streams of input data; and displaying, via the display of the user device, an input response to the input based on the at least one of the parallel streams of input data.

Additionally, two or more of the parallel streams of input data may include different degrees of prediction pertaining to the prediction data or different degrees of smoothing pertaining to the smoothing data.

Additionally, the one or more of the parallel streams of input data may comprise real data corresponding to the input.

Additionally, the outputting may comprise outputting the parallel streams of input data via an application programming interface to an application with which the user is interacting via the display.

Additionally, the application may be a handwriting application.

Additionally, the method may further comprise selecting, by the application of the user device, a different one of the parallel streams of input data subsequent to selecting the at least one of the parallel streams of input data.

According to another aspect, a user device may comprise a display, a memory that stores software, a processor that executes the software, and an input system communicatively coupled to the display. The input system may be configured to receive sensed data based on an input from a user via the display; generate parallel streams of input data based on the sensed data, wherein one or more of the parallel streams of input data comprise one or more input characteristics, wherein the one or more input characteristics comprise one or more of prediction data or smoothing data; and output the parallel streams of input data, wherein the parallel streams of input data is made available to the software with which the user is interacting.

Additionally, the input system may comprise at least one of a touch driver, a touchless driver, a touch integrated circuit, a touchless integrated circuit, a sensor hub, a touch library, or a touchless library.

Additionally, two or more of the parallel streams of input data may include different degrees of prediction pertaining to the prediction data or different degrees of smoothing pertaining to the smoothing data.

Additionally, the display may comprise at least one of a touchless screen or a touch screen.

Additionally, the software may comprise a handwriting application and the handwriting application is configured to select at least one of the parallel streams of input data.

Additionally, the display may display an input response to the input based on the at least one of the parallel streams of input data.

Additionally, the input system may be configured to use one or more prediction algorithms to generate different instances of prediction data having different degrees of prediction.

Additionally, the input system may be configured to use one or more smoothing algorithms to generate different instances of smoothing data having different degrees of smoothing.

Additionally, the input system may comprise a dedicated processor.

According to yet another aspect, a non-transitory storage medium stores instructions executable by a processor. The instructions may comprise instructions to receive sensed data based on an input from a user via a display; generate at least one stream of input data based on the sensed data, wherein the at least one stream of input data comprise one or more input characteristics, wherein the one or more input characteristics comprise one or more of prediction data or smoothing data; and output the at least one stream of input data, wherein the at least one stream of input data is made available to an application with which the user is interacting.

Additionally, the at least one stream of input data comprises two or more parallel streams of input data that include different degrees of prediction pertaining to the prediction data or different degrees of smoothing pertaining to the smoothing data.

Additionally, the at least one stream of input data may comprise real data corresponding to the input.

Additionally, the instructions may comprise instructions to use one or more prediction algorithms to generate different instances of prediction data having different degrees of prediction.

Additionally, the instructions may comprise instructions to use one or more smoothing algorithms to generate different instances of smoothing data having different degrees of smoothing.

### Description of the Drawings

Figs. 1A and 1B are diagrams illustrating an exemplary user device in which embodiments of an input system that provides parallel input data may be implemented;
Fig. 2 is a diagram illustrating exemplary components of the user device;
Fig. 3A is a diagram illustrating exemplary components of a display;
Fig. 3B is a diagram illustrating exemplary components of the input system;
Fig. 3C is a diagram illustrating exemplary types of input characteristics;
Fig. 3D is a diagram illustrating exemplary parallel input data;
Figs. 4A and 4B are diagrams illustrating an exemplary use case; and
Fig. 5 is a flow diagram illustrating an exemplary process to provide parallel input data for selection by an application of the user device.

### Detailed Description of Preferred Embodiments

The following detailed description refers to the accompanying drawings. The same reference numbers in different drawings may identify the same or similar elements.

According to an exemplary embodiment, an input system outputs multiple instances or streams of input data based on a user's use of an input device. According to an exemplary embodiment, the input device is implemented as a touch screen or a touchless screen. According to an embodiment, the input system is implemented as an input driver. For example, the input driver may include a touch driver or a touchless driver. According to another exemplary embodiment, the input system is implemented in a middleware library. According to yet another exemplary embodiment, the input system is implemented in a touch integrated circuit (IC) or a touchless IC (e.g., in the hardware layer). According to still another exemplary embodiment, the input system is implemented in a sensor hub. For example, the sensor hub includes a digital signal processing (DSP) agent.

According to an exemplary embodiment, an instance or stream of input data includes one or multiple input characteristics. According to an exemplary embodiment, an input characteristic is implemented as a predictive input characteristic. For example, the input system may output multiple instances of input data in which an instance or stream of data includes a specific degree of prediction. As an example, assume a user is gliding his or her finger across the touchscreen. A touchscreen driver outputs three input data streams responsive to the user's interaction such that prediction data representative of a predictive path of touch input is included. For example, the first stream of input data may include a low degree of prediction, the second stream of input data may include a medium degree of prediction, and the third stream of input data may include a high degree of prediction. The degree of prediction may vary based on parameters associated with prediction. For example, in terms of a line being drawn, the degree of prediction may vary in terms of a predicted length of the line, a predicted path or shape of the line, etc. Additionally, or alternatively, the degree of prediction may vary in terms of the amount of real data, which forms the basis of a prediction.

According to an exemplary embodiment, applications of a user device that includes the input system may select a particular instance or stream of input data to use during any instance of time. For example, assume a mobile device includes a handwriting application that allows the user to write on the touchscreen. The handwriting application may select one of multiple instances of input data resulting from the user's input.

As previously described, an instance or stream of input data includes one or multiple input characteristics. According to an exemplary embodiment, the input characteristic is implemented as a real input characteristic. For example, the input system outputs real input data that corresponds to the user's interaction with the input device. According to another exemplary embodiment, the input characteristic is implemented as a smoothing input characteristic. For example, the input system may output multiple instances of input data in which an instance or stream of input data includes a specific degree of smoothing. For example, smoothing input data may smooth real input data.

Other types of input characteristics may be implemented that are reflective of an input relative to the input device. For example, in a 3D input framework, a coordinate (X, Y, or Z) may be mapped to the thickness of a line or other parameter. The input system may output one or multiple instances or streams of input data in which an instance or stream of data includes a specific degree of thickness of a line, etc.

In this way, an instance or stream of input data may include multiple types of characteristics. For example, an instance of input data may include real data and a high level of prediction data. According to another example, an instance of input data may include real data and a high level of smoothing data. According to yet another example, an instance of input data may include real data, a mild degree of smoothing data, and a medium degree of prediction data. According to still another example, an instance of input data may include only a single characteristic (e.g., real data, prediction data, etc.). Accordingly, various combinations of characteristics, degree of the characteristic, etc., may be implemented within an instance of input data.

As a result of the foregoing, an application may select one or multiple instances or streams of input data. For example, the application may initially select an input data stream that includes a high degree of prediction. Thereafter, when further real data is obtained, the application may select an input data stream that includes a high degree of smoothing. According to another example, an application that is sensitive to errors of prediction may select an instance of input data that has no or minimal prediction, while another application that wants to give fast feedback to the user and is not sensitive to errors of prediction may select an instance of input data that has a high level of prediction. This may allow the application to appear to be more responsive and have less latency with respect to inputs.

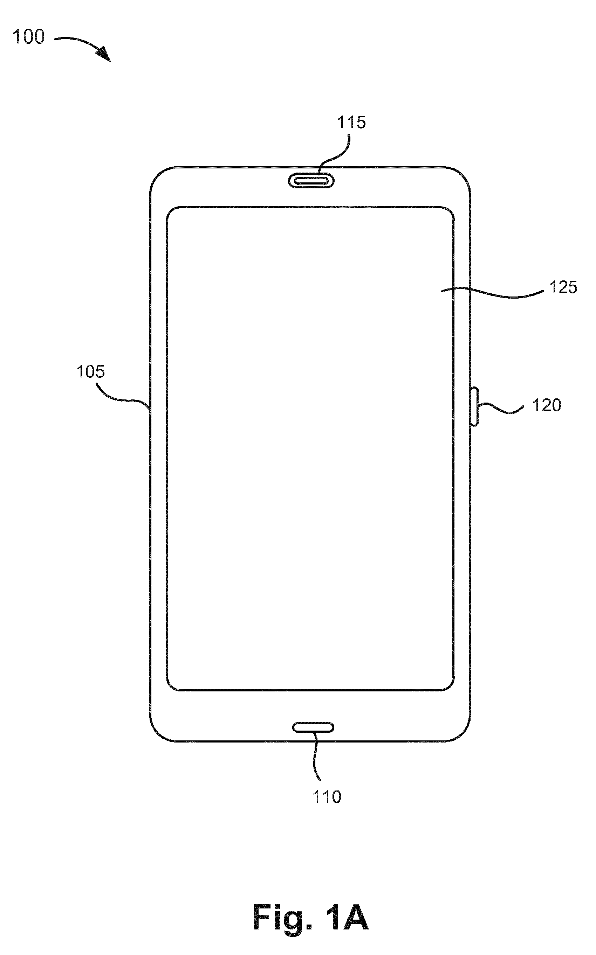

According to an exemplary embodiment, a user device includes an input system, as described herein, which provides parallel input data streams for selection by an application of the user device. Fig. 1A is a diagram of an exemplary user device 100 in which exemplary embodiments described herein may be implemented. User device 100 may be implemented as a mobile device. For example, the mobile device may take the form of a mobile telephone, a smartphone, a personal digital assistant (PDA), a tablet device, a palmtop device, a netbook, a gaming device, a location-aware device, a music playing device, or other device that includes a display (e.g., a laptop, a wrist device, a vehicular communication system, etc.).

As illustrated in Fig. 1A, user device 100 comprises a housing 105, a microphone 110, a speaker 115, a button 120, and a display 125. According to other embodiments, user device 100 may comprise fewer components, additional components, different components, and/or a different arrangement of components than those illustrated in Fig. 1A and described herein. Additionally, user device 100 may take the form of a different configuration (e.g., a slider, a clamshell, a swivel, etc.) than the configuration illustrated in Fig. 1A.

Housing 105 comprises a structure to contain components of user device 100. For example, housing 105 may be formed from plastic, metal, or some other type of material. Housing 105 supports microphone 110, speaker 115, button 120, and display 125.

Microphone 110 is capable of transducing a sound wave to a corresponding electrical signal. For example, a user may speak into microphone 110 during a telephone call or to execute a voice command. Speaker 115 is capable of transducing an electrical signal to a corresponding sound wave. For example, a user may listen to music or listen to a calling party through speaker 115. Button 120 provides an input to user device 100. For example, button 120 may be used to perform one or multiple functions (e.g., turn on/turn off user device 100, etc.).

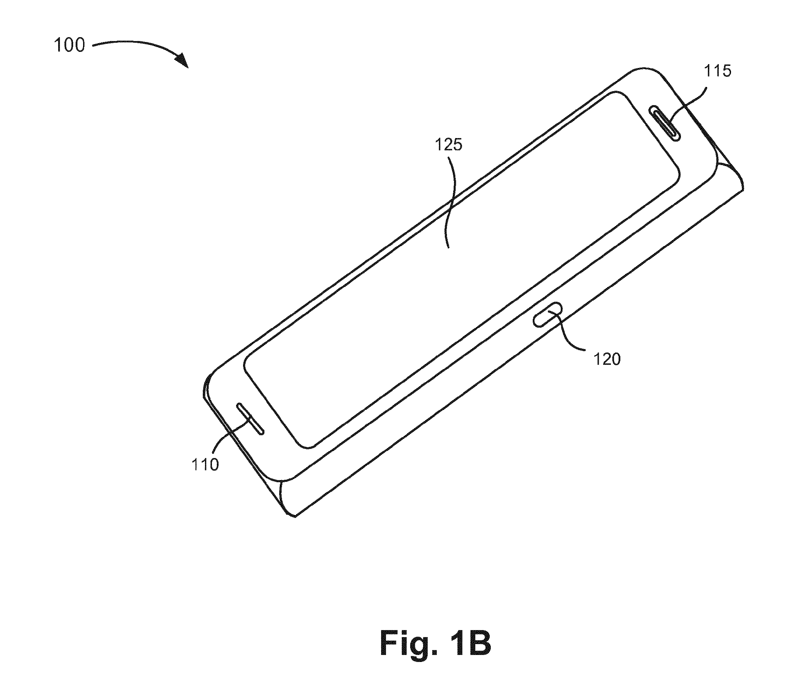

Display 125 operates as an output component. For example, display 125 may comprise a liquid crystal display (LCD), a plasma display panel (PDP), a field emission display (FED), a thin film transistor (TFT) display, or some other type of display technology (e.g., OLED, active matrix OLED (AMOLED), etc). Display 125 is capable of displaying text, pictures, video, various images (e.g., icons, objects, etc.) that may be selected by a user to access various applications, enter data, and/or navigate, etc. Additionally, display 125 operates as an input component. For example, display 125 may comprise a touch-sensitive screen. Display 125 may be implemented using a variety of sensing technologies, including but not limited to, capacitive sensing, surface acoustic wave sensing, resistive sensing, optical sensing, pressure sensing, infrared sensing, or gesture sensing. In such instances, display 125 may correspond to a single-point input device (e.g., capable of sensing a single touch) or a multipoint input device (e.g., capable of sensing multiple touches that occur at the same time). Additionally, or alternatively, display 125 may comprise a touchless screen (e.g., having air-touch, air-gesture capabilities). Fig. 1B is diagram illustrating another view of user device 100.

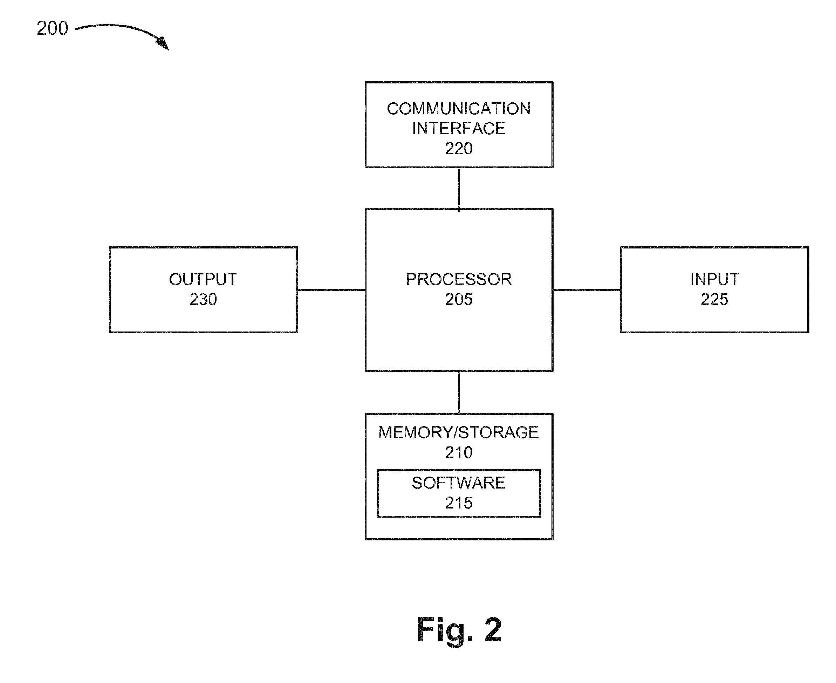

Fig. 2 is a diagram illustrating exemplary components of user device 100 depicted in the previous figures and described herein. As illustrated, according to an exemplary embodiment, user device 100 includes a processor 205, memory/storage 210, software 215, a communication interface 220, an input 225, and an output 230. According to other embodiments, user device 100 may include fewer components, additional components, different components, and/or a different arrangement of components than those illustrated in Fig. 2 and described herein.

Processor 205 includes one or multiple processors, microprocessors, data processors, coprocessors, application specific integrated circuits (ASICs), controllers, programmable logic devices, chipsets, field-programmable gate arrays (FPGAs), application specific instruction-set processors (ASIPs), system-on-chips (SoCs), central processing units (e.g., one or multiple cores), microcontrollers, and/or some other type of component that interprets and/or executes instructions and/or data. Processor 205 may be implemented as hardware (e.g., a microprocessor, etc.), a combination of hardware and software (e.g., a SoC, an ASIC, etc.), may include one or multiple memories (e.g., memory/storage 210), etc.

Processor 205 controls the overall operation or a portion of operation(s) performed by user device 100. Processor 205 performs one or multiple operations based on an operating system and/or various applications or programs (e.g., software 215). Processor 205 may access instructions from memory/storage 210, from other components of user device 100, and/or from a source external to user device 100 (e.g., a network, another device, etc.).

Memory/storage 210 includes one or multiple memories and/or one or multiple other types of storage mediums. For example, memory/storage 210 may include one or multiple types of memories, such as, random access memory (RAM), dynamic random access memory (DRAM), cache, read only memory (ROM), a programmable read only memory (PROM), a static random access memory (SRAM), a single in-line memory module (SIMM), a phase-change memory (PCM), a dual in-line memory module (DIMM), a flash memory, and/or some other type of memory. Memory/storage 210 may include a hard disk (e.g., a magnetic disk, an optical disk, a magneto-optic disk, a solid state disk, etc.), a Micro-Electromechanical System (MEMS)-based storage medium, and/or a nanotechnology-based storage medium. Memory/storage 210 may include drives for reading from and writing to the storage medium.

Memory/storage 210 may be external to and/or removable from user device 100, such as, for example, a Universal Serial Bus (USB) memory stick, a dongle, a hard disk, mass storage, off-line storage, or some other type of storing medium (e.g., a compact disk (CD), a digital versatile disk (DVD), a Blu-Ray® disk (BD), etc.). Memory/storage 210 may store data, software, and/or instructions related to the operation of user device 100.

Software 215 may include an application or a program that provides a function and/or a process. Software 215 may include firmware. By way of example, software 215 may comprise a telephone application, a multi-media application, an e-mail application, a contacts application, a calendar application, an instant messaging application, a web browsing application, a location-based application (e.g., a Global Positioning System (GPS)-based application, etc.), a handwriting application, a camera application, etc. As described herein, the input system may be implemented, in part, using software 215. The input system may also rely on processor 205 for the execution of software 215 pertaining to the input system. Additionally, or alternatively, the input system may include a dedicated processor/circuitry to execute software 215. Exemplary components of the input system are described further below.

Communication interface 220 permits user device 100 to communicate with other devices, networks, systems, etc. Communication interface 220 may include one or multiple wireless interfaces and/or wired interfaces. Communication interface 220 may include one or multiple transmitters, receivers, and/or transceivers. Communication interface 220 operates according to one or multiple protocols, a communication standard, and/or the like.

Input 225 permits an input into user device 100. For example, input 225 may include a keyboard, a mouse, a display, a touchscreen, a touchless screen, a button, a switch, an input port, speech recognition logic, and/or some other type of visual, auditory, tactile, etc., input component. Output 230 permits an output from user device 100. For example, output 230 may include a speaker, a display, a touchscreen, a touchless screen, a light, an output port, and/or some other type of visual, auditory, tactile, etc., output component.

User device 100 may perform a process and/or a function in response to processor 205 executing software 215 stored by memory/storage 210. By way of example, instructions may be read into memory/storage 210 from another memory/storage 210 or read into memory/storage 210 from another device via communication interface 220. The instructions stored by memory/storage 210 causes processor 205 to perform the process or the function. Alternatively, user device 100 may perform a process or a function based on the operation of hardware (processor 205, etc.).

As previously described, according to an exemplary embodiment, user device 100 includes an input system that provides parallel input data streams. A description of exemplary components of an input device (e.g., a touchless display or a touch display) pertaining to the input system is described further below.

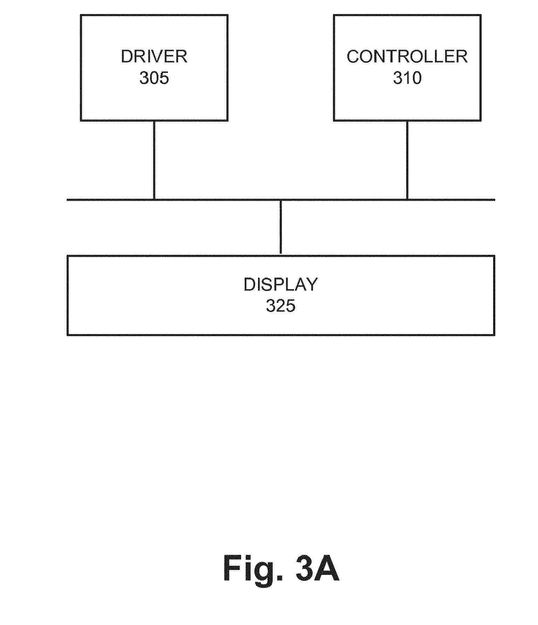

Referring to Fig. 3A, according to an exemplary embodiment, display 125 comprises a driver 305 and a controller 310. For description purposes, a display 325 (e.g., OLED, LCD, etc.) is also illustrated. The connections between these components are merely exemplary.

Driver 305 comprises logic that manages display 325, such as, for example, enabling and disabling, power-state change notifications, and calibration functions pertaining to display 325. Controller 310 comprises logic to control and/or integrate functions associated with display 125. For example, controller 310 may control and/or integrate components such as display driving and sensing circuits, power circuits, finger/instrument tracking, touchless tracking, and digital signal processing pertaining to display 325.

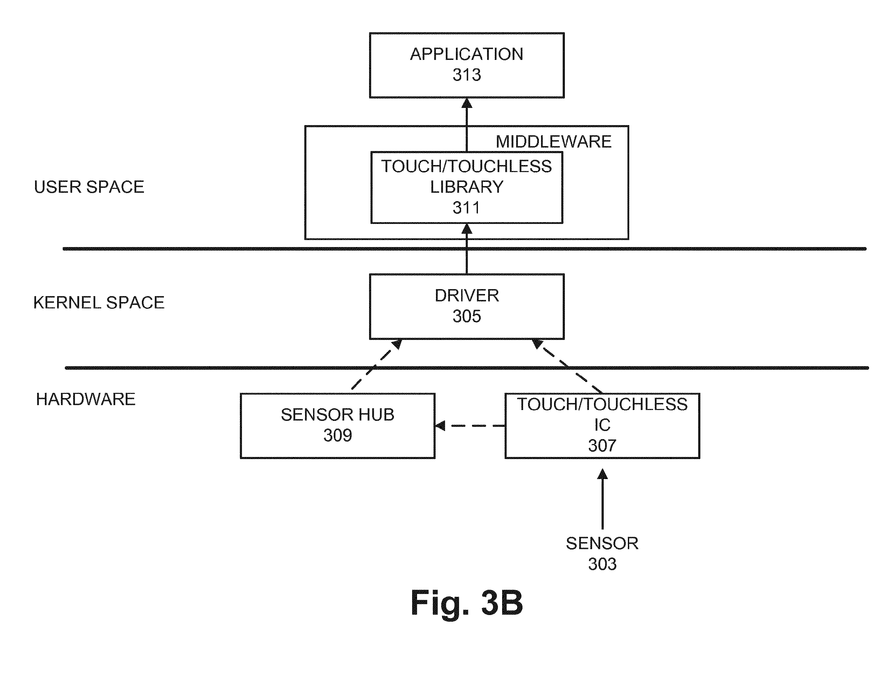

As previously described, according to an exemplary embodiment, the input system may be implemented in an input driver, in a middleware library, in a touch integrated circuit (IC) or a touchless IC, or in a sensor hub. Fig. 3B is a diagram illustrating exemplary embodiments of the input system. Although, Fig. 3B illustrates a user space, kernel space, and hardware layer, these spaces/layers are exemplary and may have other nomenclatures depending on the operating system, platform, etc., implemented. As illustrated, according to exemplary embodiments, the input system may be implemented in driver 305, a touch or touchless IC 307, a sensor hub 309, or a touch or touchless library 311. A sensor 303 (e.g., a detection unit) comprises logic to detect an input of a user. For example, as previously described, display 125 may be implemented using a variety of sensing technologies, such as capacitive sensing, surface acoustic wave sensing, resistive sensing, optical sensing, pressure sensing, etc. Instances of sensed data output from sensor 303 may be input to the input system. In response to receiving the sensed data or processed sensed data, the input system (e.g., driver 305, a touch or touchless IC 307, a sensor hub 309, or a touch or touchless library 311) may output one or multiple instances of input data, as described herein.

Referring to Fig. 3B, driver 305 operates in a kernel space in which input data is exposed via a kernel interface to a user space. For example, on a Linux-based user device 100, the input data (e.g., kernel data structures, their attributes, linkages between them, etc.) may be exposed via "sysfs" (e.g., a RAM-based file system) to the user space. According to other implementations in which a different operating system exists, driver 305 may expose the input data via a different pathway, file, etc., supported by the operating system or configuration of user device 100. Touch or touchless IC 307 operates in a hardware layer. Additionally, sensor hub 309 operates in the hardware layer. Sensor hub 309 may be implemented as a DSP. Sensor hub 309 may process other sensor data (e.g., accelerator, etc.), in addition to sensor data stemming the user's interaction with display 125. Sensor hub 309 may include software to generate the multiple inputs. Touch or touchless library 311 operates in the user space as a middleware library. Touch or touchless library 311 includes an application programming interface (API) to application 313. Touch or touchless library 311 may expose the API or be integrated with a high level operating system (OS) framework. Additionally, touch or touchless library 311 may translate low level touch inputs into OS-specific touch/touchless events. Fig. 3B illustrates various pathways by which sensed data or processed sensed data may be received by an embodiment of the input system (e.g., driver 305, etc.) and input data may be exposed to application 313.

According to an exemplary embodiment, the input system, as described herein, may include multiple components (e.g., touch or touchless IC 307 and sensor hub 309, etc.). For example, sensor hub 309 may store algorithms (e.g., predictive, smoothing, etc.) and touch or touchless IC 307 generates parallel streams of input data based on the use of the algorithms stored by sensor hub 309. Other combinations of components (e.g., driver 305 and sensor hub 309, etc.) may be implemented to carry out the functionality of the input system, as described herein.

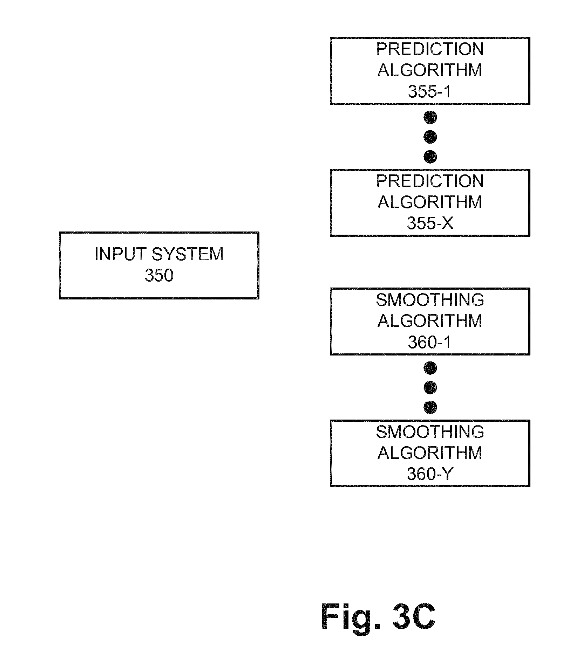

As previously described, according to an exemplary embodiment, an instance or stream of input data includes one or multiple input characteristics. For example, referring to Fig. 3C, an input system 350 may use one or multiple algorithms to generate the stream of input data. For example, input system 305 may use multiple prediction algorithms 355-1 through 355-X to calculate various degrees of prediction and generate multiple instances of prediction data. Alternatively, input system 305 may use a single prediction algorithm. Similarly, input system 350 may use multiple smoothing algorithms 360-1 through 360-Y or a single algorithm to calculate one or multiple degrees of smoothing and generate one or multiple instances of smoothing data. Although prediction data and smoothing data has been presented as possible types of input characteristics, these types of input characteristics are merely exemplary and are not intended to be an exhaustive treatment of this aspect of the input system 350.

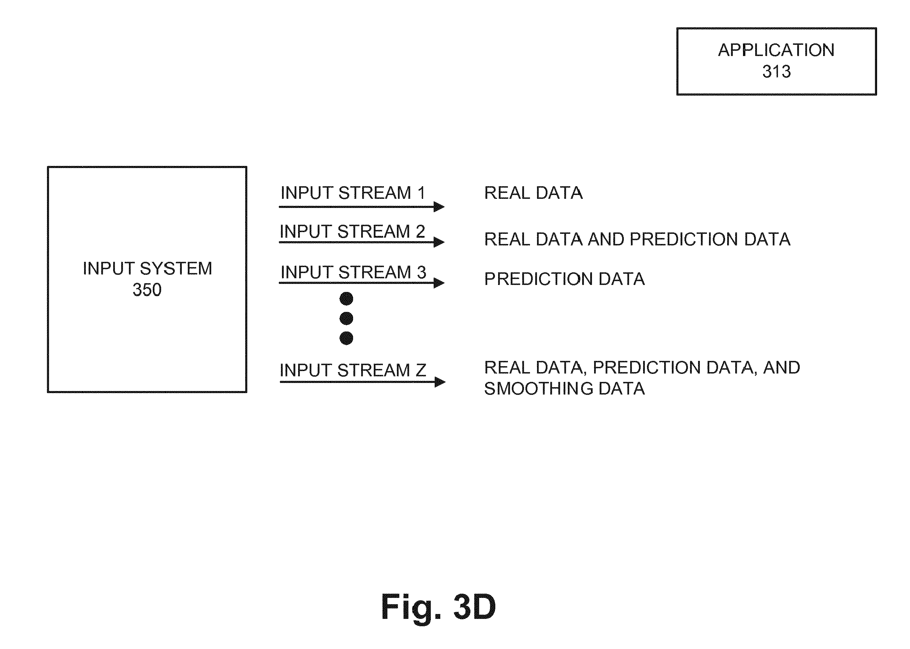

Additionally, as previously described, according to an exemplary embodiment, applications of a user device may select from one or multiple streams of input data during any instant/time period. For example, referring to Fig. 3D, input system 350 outputs multiple streams of input data (e.g., input streams 1 through Z). Each stream of input data includes one or multiple input characteristics (e.g., real data, real data and prediction data, etc.).

Application 313 may select an appropriate input data stream during any given instant in time. Application 313 may correspond to various types of software. For example, application 313 may correspond to a drawing application or a handwriting application. Alternatively, application 313 may include an application that includes various interactive elements (e.g., a menu, scroll bar, etc.) in which prediction and/or some other type of input characteristic may be useful (e.g., in terms of degree thereof, responsiveness to user, etc.).

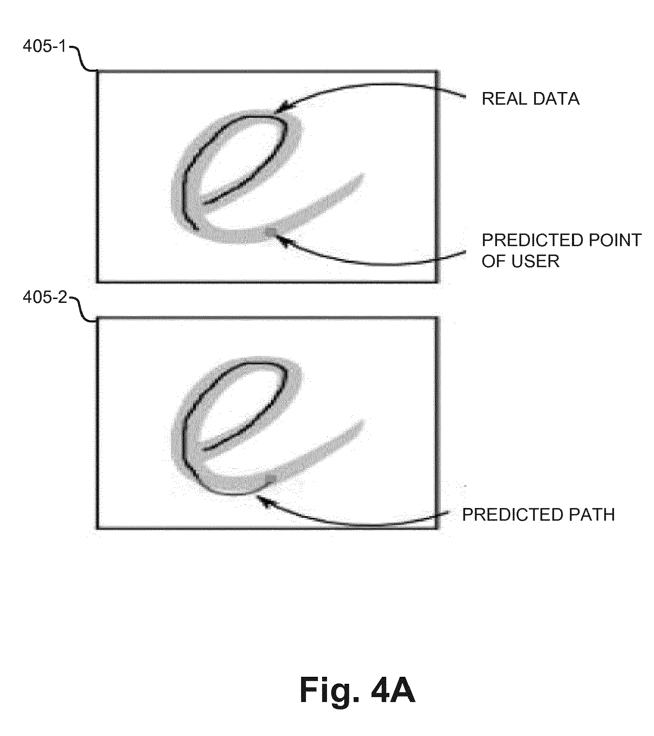

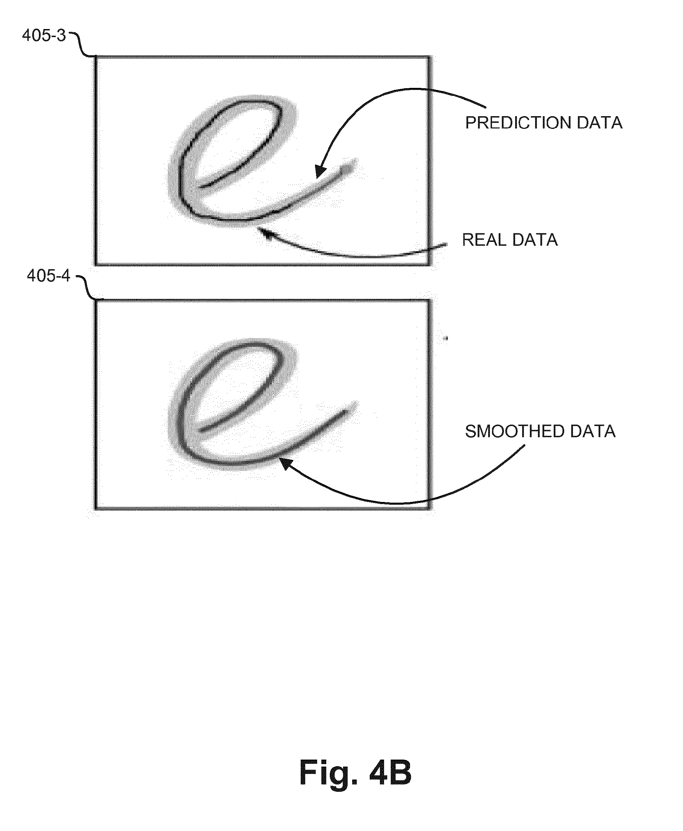

As a result of a selection of an input data stream, by application 313, a user's experience with user device 100 may differ. As an example, from the perspective of the user, Figs. 4A and 4B illustrate a series of timing diagrams 405-1 through 405-4 in which a cursive letter "e" is being drawn by a user via a handwriting application and display 125. The handwriting application may select and use different streams of parallel input data to display a progression of the drawing of the cursive letter "e" by the user. Referring to Fig. 4A, diagram 405-1 illustrates the user having begun to write the cursive letter"e". As illustrated, real data corresponding to the user's input is displayed to the user. Additionally, referring to diagrams 405-1 and 405-2, the input system may use the real data to predict a prediction point and path for drawing the cursive letter "e". The predicted path may be displayed (momentarily) to the user. Referring to Fig. 4B, diagram 405-3 illustrates the real data and the use of prediction data. For example, the use and display of the prediction data to the user may make user device 100 to appear more responsive to user input (e.g., faster to respond). Diagram 405-4 illustrates the completed letter "e" being displayed, which may be based on the use of smoothed data. The smoothed data may give the completed letter "e" a better appearance and/or a more accurate representation. Additionally, as represented in Figs. 4A and 4B, the handwriting application may select different streams of input data during the creation of the letter "e". For example, the handwriting application may initially select input data that includes just real data and then later select input data that includes real data and prediction data.

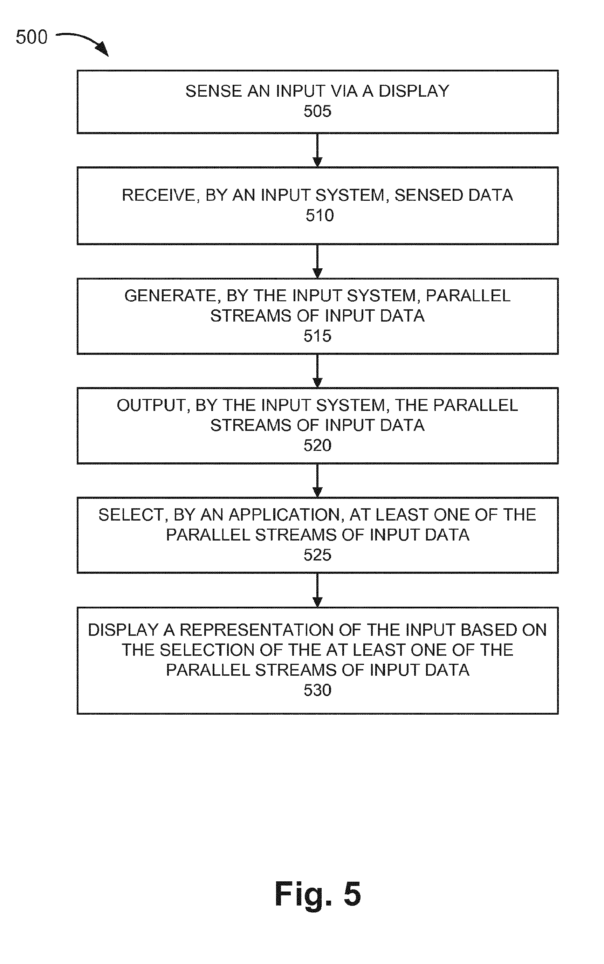

Fig. 5 is a flow diagram illustrating an exemplary process 500 to provide parallel input data for selection by an application of a user device according to an exemplary embodiment. A step or an act described in process 500 may be performed by one or multiple components of user device 100. For example, processor 205 may execute software 215 to perform the step described. Additionally, or alternatively, another component of user device 100 may perform the step described.

Referring to Fig. 5, in block 505, a display senses an input. For example, a user touches (e.g., with the user's finger, an instrument, etc.) display 125. Alternatively, when display 125 is a touchless display, the user places his/her finger or instrument proximate to display 125. In response, display 125 senses the input via one or multiple sensing technologies (e.g., capacitive, resistive, etc.).

In block 510, an input system receives sensed data. For example, driver 305, touch or touchless IC 307, sensor hub 309, and/or touch or touchless library 311 receives sensed data from sensor 303 of display 125.

In block 515, the input system generates parallel streams of input data. For example, driver 305, touch or touchless IC 307, sensor hub 309, and/or touch or touchless library 311 generates parallel streams of input data based on the sensed data. As previously described, the parallel streams of input data may include different input characteristics and degrees thereof. By way of example, the input system may use one or multiple types of algorithms to generate different types of input data (e.g., prediction data, smoothing data, etc.) in addition real data.

In block 520, the input system outputs the parallel streams of input data. For example, input system 350 outputs the parallel streams of input data for use by application 313. For example, an API may serve as a transport mechanism to make available the parallel streams of input data for the application.

In block 525, an application selects at least one of the parallel streams of input data. For example, application 313 selects at least one of the parallel streams of input data. By way of further example, application 313 may select a stream of input data that includes real data; real data and prediction data; or real data, prediction data, and smoothing data, etc. The prediction data and/or the smoothing data may provide a certain degree of prediction and/or smoothing functionality. By way of further example, with reference to Figs. 4A and 4B, the handwriting application selects and uses a particular stream of input data over the period of time during which the letter was drawn.

In block 530, the display displays a representation of the input based on the selection of the at least one of the parallel streams of input data. For example, the input is displayed via display 125 based on the selection of the at least one of the parallel streams of input data. By way of further example, an input of step 505 may be displayed to a user as an input having a certain degree of prediction and smoothing characteristics.

Although Fig. 5 illustrates an exemplary process 500 to provide parallel input data, process 500 may include additional operations, fewer operations, and/or different operations than those illustrated in Fig. 5 and described herein.

The foregoing description of embodiments provides illustration, but is not intended to be exhaustive or to limit the embodiments to the precise form disclosed. Accordingly, modifications to the embodiments described herein may be possible.

The terms "a," "an," and "the" are intended to be interpreted to include one or more items. Further, the phrase "based on" is intended to be interpreted as "based, at least in part, on," unless explicitly stated otherwise. The term "and/or" is intended to be interpreted to include any and all combinations of one or more of the associated items.

In addition, while a series of blocks has been described with regard to the process illustrated in Fig. 5, the order of the blocks may be modified according to other embodiments. Further, non-dependent blocks may be performed in parallel. Additionally, other processes described in this description may be modified and/or non-dependent operations may be performed in parallel.

The embodiments described herein may be implemented in many different forms of software, firmware, and/or hardware. For example, a process or a function may be implemented as "logic" or as a "component." This logic or this component may include hardware (e.g., processor 205, a dedicated processor (not illustrated), etc.) or a combination of hardware and software (e.g., software 215). The embodiments have been described without reference to the specific software code since software can be designed to implement the embodiments based on the description herein and the accompanying drawings.

Additionally, embodiments described herein may be implemented as a non-transitory storage medium that stores data and/or information, such as instructions, program code, data structures, program modules, an application, etc. For example, a non-transitory storage medium includes one or more of the storage mediums described in relation to memory/storage 210.

The terms "comprise," "comprises" or "comprising," as well as synonyms thereof (e.g., include, etc.), when used in the specification is meant to specify the presence of stated features, integers, steps, or components but does not preclude the presence or addition of one or more other features, integers, steps, components, or groups thereof. In other words, these terms are to be interpreted as inclusion without limitation.

In the preceding specification, various embodiments have been described with reference to the accompanying drawings. However, various modifications and changes may be made thereto, and additional embodiments may be implemented, without departing from the broader scope of the invention as set forth in the claims that follow. The specification and drawings are accordingly to be regarded as illustrative rather than restrictive. By way of example, according to an exemplary implementation, when an application is initially executed, there may be a communication between the input system and the application to establish a type of input data (e.g., prediction, smoothing, etc.) that will be used by the application and/or a particular degree of input data (e.g., prediction, smoothing, etc.) that will be used by the application. In this way, the input system may conserve resources by not generating certain types of input data and/or certain degrees of input data. For example, if an application does not require smoothing data or prediction data, the input system may forego generating this type of input data.

In the specification and illustrated by the drawings, reference is made to "an exemplary embodiment," "an embodiment," "embodiments," etc., which may include a particular feature, structure or characteristic in connection with an embodiment(s). However, the use of the phrase or term "an embodiment," "embodiments," etc., in various places in the specification does not necessarily refer to all embodiments described, nor does it necessarily refer to the same embodiment, nor are separate or alternative embodiments necessarily mutually exclusive of other embodiment(s). The same applies to the term "implementation," "implementations," etc.

No element, act, or instruction described in the present application should be construed as critical or essential to the embodiments described herein unless explicitly described as such.

## Claims

1. A method comprising:
sensing, via a display of a user device, an input from a user;
receiving, by an input system of the user device, sensed data;
generating, by the input system of the user device, parallel streams of input data based on the sensed data, wherein one or more of the parallel streams of input data comprise one or more input characteristics, wherein the one or more input characteristics comprise one or more of prediction data or smoothing data;
outputting, by the input system of the user device, the parallel streams of input data;
selecting, by an application of the user device, at least one of the parallel streams of input data; and
displaying, via the display of the user device, an input response to the input based on the at least one of the parallel streams of input data.

2. The method of claim 1, wherein two or more of the parallel streams of input data includes different degrees of prediction pertaining to the prediction data or different degrees of smoothing pertaining to the smoothing data.

3. The method of claim 1, wherein the one or more of the parallel streams of input data comprise real data corresponding to the input.

4. The method of claim 1, wherein the outputting comprises:
outputting the parallel streams of input data via an application programming interface to an application with which the user is interacting via the display, wherein the application is a handwriting application.

5. The method of claim 1, further comprising:
selecting, by the application of the user device, a different one of the parallel streams of input data subsequent to selecting the at least one of the parallel streams of input data.

6. A user device comprising:
a display;
a memory, wherein the memory stores software;
a processor, wherein the processor executes the software; and
an input system communicatively coupled to the display and configured to:
receive sensed data based on an input from a user via the display;
generate parallel streams of input data based on the sensed data, wherein one or more of the parallel streams of input data comprise one or more input characteristics, wherein the one or more input characteristics comprise one or more of prediction data or smoothing data; and
output the parallel streams of input data, wherein the parallel streams of input data is made available to the software with which the user is interacting.

7. The user device of claim 6, wherein the input system comprises at least one of:
a touch driver;
a touchless driver;
a touch integrated circuit;
a touchless integrated circuit;
a sensor hub;
a touch library; or
a touchless library.

8. The user device of claim 6, wherein two or more of the parallel streams of input data includes different degrees of prediction pertaining to the prediction data or different degrees of smoothing pertaining to the smoothing data, and wherein the display comprises at least one of a touchless screen or a touch screen.

9. The user device of claim 6, wherein the software comprises a handwriting application, and wherein the handwriting application is configured to:
select at least one of the parallel streams of input data.

10. The user device of claim 9, wherein the display displays an input response to the input based on the at least one of the parallel streams of input data.

11. The user device of claim 6, wherein the input system is further configured to:
use one or more prediction algorithms to generate different instances of prediction data having different degrees of prediction; and.
use one or more smoothing algorithms to generate different instances of smoothing data having different degrees of smoothing.

12. A non-transitory storage medium that stores instructions executable by a processor, the instructions comprise instructions to:
receive sensed data based on an input from a user via a display;
generate at least one stream of input data based on the sensed data, wherein the at least one stream of input data comprise one or more input characteristics, wherein the one or more input characteristics comprise one or more of prediction data or smoothing data; and
output the at least one stream of input data, wherein the at least one stream of input data is made available to an application with which the user is interacting.

13. The non-transitory storage medium of claim 12, wherein the at least one stream of input data comprises two or more parallel streams of input data that include different degrees of prediction pertaining to the prediction data or different degrees of smoothing pertaining to the smoothing data.

14. The non-transitory storage medium of claim 12, wherein the at least one stream of input data comprises real data corresponding to the input.

15. The non-transitory storage medium of claim 12, wherein the instructions comprise instructions to:
use one or more prediction algorithms to generate different instances of prediction data having different degrees of prediction; and
use one or more smoothing algorithms to generate different instances of smoothing data having different degrees of smoothing.
